(19) **Europäisches Patentamt / European Patent Office / Office européen des brevets**

(11) **EP 1 763 173 A2**

(12) **EUROPEAN PATENT APPLICATION**

(43) Date of publication:
**14.03.2007 Bulletin 2007/11**

(51) Int Cl.:
**H04L 12/26** *(2006.01)*

(21) Application number: **06254670.0**

(22) Date of filing: **07.09.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **08.09.2005 US 715103 P** | (71) Applicant: **Acterna, LLC**<br>**Germantown, MD 20876 (US)**<br><br>(72) Inventor: **Kryuchkov, Sergey V.**<br>**Morrisville, NC 27560 (US)**<br><br>(74) Representative: **McKechnie, Neil Henry et al**<br>**Kennedys Patent Agency Limited**<br>**185 St Vincent Street**<br>**Glasgow G2 5QD (GB)** |

(54) **Transmission quality monitoring for multimedia streams**

(57) A network performance monitor and an associated method for monitoring the perceived transmission quality of a packetized multimedia signal encoded by a first codec are provided. The monitor includes a packet processor for performing real time direct counting of received and lost packets in the burst and gap states in the packet stream carrying the multimedia signal. A data processor is provided for determining packet loss distribution parameters using the burst and gap packet counters provided by the packet processor. In one aspect of the invention, the data processor is operative to compute an effective equipment impairment factor from the packet loss distribution parameters for a reference codec having known transmission impairments associated therewith, for assessing the network contribution to the perceived transmission quality of the multimedia signal.

**FIG. 6**

EP 1 763 173 A2

**Description**

**CROSS-REFERENCE TO RELATED APPLICATIONS**

The present invention claims priority from United States Provisional Patent Application No. 60/715,103 filed September 8th, 2005, entitled "Network Performance and Packet Loss Distribution Estimation", which is incorporated herein by reference.

**TECHNICAL FIELD**

The present invention relates generally to network communications, and more particularly to estimating the subjective quality of a communication network in transmitting a voice, audio or video signal.

**BACKGROUND OF THE INVENTION**

Communication systems that use packet based TCP/IP protocols and packet switching for transmitting multimedia signals, such as digitized voice, audio and video, provide a more flexible and lower cost alternative to traditional telecommunications networks. They do however introduce some problems, notably increased variation in user perceived speech quality due to network impairments. The present invention relates to methods for estimating this variation in user perceived quality.

Typical packet networks cause some packets to be lost or delayed which results in the quality of the decoded audio, voice or video being degraded and it is accordingly desirable to have some means of measuring or estimating the subjective or perceptual quality of the decoded audio, voice or video.

For example, a typical Voice over IP (VoIP) system comprises two or more conversion devices, also referred to as conversion points, and a connecting network. A conversion device converts analog voice into packet format suitable for transmission over a network; it can be a device within a telephone switching system, a packet voice telephone, a personal computer running an applications program or other device. At each conversion point the analog voice signal from the user's telephone is converted to a digital form, divided into short segments, compressed, placed into an IP packet and then transmitted over the connecting network to the remote conversion point using the Real Time Protocol (RTP), which is a network transport layer protocol for transmitting real time data. RTP provides end-to-end network transport functions suitable for applications transmitting real-time data, such as audio, video or simulation data, over multicast or unicast network services, and is described in an IETF document RFC 1889, which is incorporated herein by reference.

Received voice packets are uncompressed, converted back to analog form and played to the user as an audible signal. A conversion device uses a codec to convert the analogue voice, audio or video signal into the digital form; a codec is a software module that provides digital encoding and compression of a voice signal before transmission over a network, and decoding and decompression of a received signal on another end of the network.

The connecting network relays the IP packets from one conversion point to another. The network is a shared resource that carries many other streams of packet data, and may impair the signal e.g. by losing or delaying packets. This means that any given packetized signal may be subject to impairments, for example: (i) Delay, in which the time for the packet to get from one conversion point to the other conversion point causes delays in the apparent response from one user to the other (ii) Packet loss, in which some of the packets are lost or arrive so late that they are discarded (iii) Jitter, in which the arrival time of the packets varies (iv) Distortion, due largely to the voice compression algorithm, or in other words a type of codec used.

These impairments collectively cause the user perceived voice quality to vary considerably and hence VoIP service providers need a method for estimating the quality of service provided by their network (Voice Quality of Service).

A variety of different approaches have been used in the past to provide a voice quality score for voice communications. The conventional measure from the analog telephone experience is the Mean Opinion Score (MOS) described in ITU-T recommendation P.800 available from the International Telecommunications Union. In general, the MOS score is derived from the results of humans listening and grading what they hear from the perspective of listening quality and listening effort, and ranges from a low of 1.0 to a high of 5.0.

The MOS approach is beneficial in that it characterizes what humans think at a given time based on a received voice signal. However, human MOS data may be expensive and time consuming to gather and, given its subjective nature, may not be easily repeatable. The need for humans to participate as evaluators in a test every time updated information is desired along with the need for a VoIP equipment setup for each such test contribute to these limitations of the conventional human MOS approach. Such advance arrangements for measurements may limit when and where the measurements can be obtained. Human MOS is also generally not well suited to tuning type operations that may benefit from simple, frequent measurements. Human MOS may also be insensitive to small changes in performance such as those used for tuning network performance by determining whether an incremental performance change following a network change was an improvement or not.

Other approaches for estimating voice quality that are more suitable for use in network monitoring equipment estimate the subjective performance of the voice connection using objectively measured parameters. One such commonly used approach is based on the E-Model that is described in ITU-T recommendation G.107 and ETSI document TS 102 024-5, which are incorporated herein by reference, and is intended to assist telecom service providers with network planning and performance monitoring. For example, a method of estimating the transmission quality of VoIP calls by non-intrusive real-time passive monitoring of the calls that is based on the E-model is described in A. D. Clark, "Modeling The Effects Of Burst Packet Loss And Recency On Subjective Voice Quality," 2nd IP-Telephony Workshop, Columbia University, New York, April 2001, which is incorporated herein by reference. Technology for VoIP calls monitoring using the method described in this paper is marketed as VQmon and offered as a commercial product by **Telchemy,** Inc. (see www.telchemy.com).

The E-model provides as an output the so-called R-factor, which quantifies an end-user perception of the call quality and accounts for all distortions of voice going through a communication channel, "from mouth to ear", including impairments caused by packet delay, low bit rate codecs and impairments due to packet loss and rejection. Algorithms implementing the E-model are provided in the ITU-T Recommendation G.107 and the ETSI TS 102 024-5 specification.

The $R$ factor that captures all major impairments introduced by various voice channel elements on the way of the voice signal from one end-point of the voice communication channel to another, and therefore estimates the overall perceptual quality of the voice transmitted through the channel, is also sometimes denoted as $R_{CQE}$, where "CQE" stands for "conversational quality estimate." There are situations when a "one-way" constant delay of a packet stream is not very important, e.g. when listening to music or receiving a video stream, and the delay-induced impairments can be disregarded. In this case, another known in the art parameter $R_{LQE}$, where 'LQE' stands for "listening quality estimate," which does not account for packet delays, can be used for network performance monitoring.

Prior art methods for estimating voice quality using the E-model suffer from the following drawbacks.

First, although the $R_{LQE}$ and $R_{CQE}$ factors provide a useful tool for monitoring VoIP systems for end-users of the VoIP equipment who are interested in the overall call or audio stream quality "from mouth to ear", they incorporate factors that are network-independent, e.g. those that depend on a used codec. These factors mask effects of the network on the VoIP delivery quality, thus making it more difficult for a network operator to monitor the network-related impairments. A list of codecs that can be used in the VoIP technology includes the following codecs:

• G.711 A-law or μ-law (not very high compression - very good quality of voice),

• G.729 (good compression, but quality of voice is not as good as with G.711),

• G.723.1 (provides even stronger compression than G.729, but quality of voice is significantly worse than provided by G.729; additionally G.723.1 introduces a longer delay which also degrades the perceived quality).

Second, prior art methods for determining the packet loss induced impairments have drawbacks that can lead to erroneous estimates of the packet loss related impairments.

Heretofore, packet loss induced impairments have been conventionally calculated using statistical approaches. In particular, the ITU Recommendation G.107 describes a method that assumes the packet loss events are uniformly distributed within the call duration. It was, however, observed that the voice stream quality depends significantly on a packet loss distribution, which in real-life systems may not be uniform in time, but often contains bursts of lost packets.

The ETSI TS 102 024-5 specification provides an improved algorithm for calculation of the equipment impairment factor *Ie-eff* described below based on a representation of a voice stream as a sequence of low packet loss intervals, or gaps, and high packet loss intervals, or bursts, using a statistical approach. This specification describes a four-state Markov chain based statistical model for evaluation of a packet loss distribution.

However, the Markov chain based statistical approach used in the prior art methods for evaluating VoIP signals has a number of disadvantages.

One disadvantage is that it may require a significant amount of data to provide good statistical estimates. If the packet stream has a small number of bursts and gaps, e.g. 1 or 2, estimates given by the statistical model can have significant errors.

Another disadvantage of this Markov Chain algorithm, or at least of its disclosed implementations, is in its handling of multiple packets that are lost or discarded in a row. For example, implementations of the Markov chain algorithm that are described in the Internet Engineering Task Force (IETF) document RFC 3611 "RTP Control Protocol Extended Reports (RTCP XR)", 2003, and in the ETSI TS 102 024-5 specification can only account for one packet lost in a row. Therefore, to correctly account for multiple packet loss events the algorithm has to be executed in hardware a number of times equal to the number of lost packets in a row. This however makes the algorithm execution timing to depend on the traffic pattern, which is usually unacceptable for the monitoring hardware that has a fixed clock budget that cannot be exceeded. Another possible approach to handling of multiple packet loss using the prior art method is to call the algorithm only once independently on the number of packets lost in a row, which makes the algorithm to incorrectly report a shorter burst length and a smaller burst packet loss percentage.

Another disadvantage of the aforedescribed prior-art algorithm is that it determines gap to burst transitions on the basis of the prior packet loss history only, without taking into account following packet loss events. This may result in assigning a packet lost at the beginning of a burst interval to the preceding gap interval. This means that the algorithm in general underestimates the length of a burst and the number of packets lost in the burst.

Another disadvantage of the aforedescribed algorithm lies in its lack of a specific treatment of statistical outliers associated with the very end of the stream, which may lead to miscalculation of the statistical parameters of the stream.

Accordingly, an object of this invention is to provide a method and device for monitoring the network contribution in the subjective or perceptual quality of a multimedia, i.e. voice, audio or video, signal transmitted as a sequence of packets, which takes into account packet loss related impairments in a way that is independent on a particular codec used in transmitting the signal.

Another object of the present invention is to provide a method and device for monitoring the subjective or perceptual quality of a multimedia, i.e. voice, audio or video, signal transmitted as a sequence of packets, which employs an improved approach to estimating packet loss related impairments.

Another object of this invention is to provide a method for determining a packet loss impairment contribution to the subjective quality of packetized transmission of multimedia signals, which takes into account statistical outliers associated with an end of the transmission, and does not underestimate the length of burst intervals.

Another object of this invention is to provide a method for determining a packet loss impairment contribution to the subjective quality of packetized transmission of multimedia signals, that estimates average lengths of burst and gap intervals by direct counting of packets lost and/or received during each of the burst and gap intervals for the duration of the signal transmission.

## SUMMARY OF THE INVENTION

In accordance with the invention, a device for network performance monitoring is provided, comprising: a network interface coupled to the network for receiving a packet stream therefrom carrying data transmitted by a single sender; a packet processor coupled with the network interface for processing the packet stream, comprising: a lost packet detector operative to infer lost or discarded packets in the received packet stream, and a packet classifier operatively coupled to the lost packet detector for associating each of the received packets with one of a plurality of states, said plurality of states comprising a high packet loss state and a low packet loss state. The device further comprises: a memory coupled with the packet processor, said memory including a first memory unit for storing a cumulative number of packets received or packets lost in the high packet loss state, and a second memory unit for storing a cumulative number of packets received or packets lost in the low packet loss state; and, a data processing unit coupled to the memory for computing one or more characteristics of the high and low packet loss states using the values stored in the first and second memory units.

In accordance with another aspect of this invention, a method is provided for monitoring performance of a packet network in transmitting a multimedia signal, the method comprising: a) receiving a stream of packets from the packet network, said stream of packets corresponding to an ordered sequence of packets representing the multimedia signal; b) inferring lost packet events in places of the ordered sequence of packets not having a corresponding received packet; c) associating each of the received packets with one of a high packet loss interval or a low packet loss interval in the ordered sequence of packets; wherein step (c) includes associating a lost packet event that follows a received packet associated with a gap interval, with a burst interval, if the number of sequentially received packets immediately following the packet loss event exceeds a pre-determined minimal value.

Another aspect of the present invention provides a method for estimating a packet network contribution in the perceived transmission quality of a multimedia signal encoded using a first codec, the method comprising the steps of: a) receiving a packet stream carrying the multimedia signal from the network; b) processing the received packet stream to obtain a value of a codec-dependent transmission impairment factor for a reference codec having known transmission impairments associated therewith; c) using the obtained value of the codec-dependent transmission impairment factor for the reference codec, determine a transmission quality rating parameter RNPE representing a transmission quality estimate for the reference codec; and, d) using the transmission quality rating parameter RNPE to estimate the network contribution into the perceived quality of the received multimedia signal.

## BRIEF DESCRIPTION OF THE DRAWINGS

The invention will be described in greater detail with reference to the accompanying drawings which represent preferred embodiments thereof, wherein like reference numerals refer to like parts throughout the various views unless otherwise specified:

Figure 1 is a diagram illustrating an application of the transmission quality monitor in a VoIP communication system;

Figure 2 is a block scheme of one embodiment of the transmission quality monitor;

Figure 3 is a diagram of the voice stream model used in the present invention;

Figure 4 is a flow chart of the method for monitoring the network contribution in the subjective performance of a packet communication system in transmitting a real time multimedia signal;

Figure 5 is a diagram of the Finite State Machine (FSM) representing the received packet stream;

Figure 6 is a functional diagram illustrating the transmission quality monitor according of the present invention;

Figure 7 is a block diagram illustrating the packet processing algorithm of the present invention;

Figure 8 is a C++ code implementation of the algorithm shown in FIG.7;

Figure 9 is a flow chart of an algorithm for computing the average burst length according to the invention;

Figures 10A and 10B are diagrams illustrating exemplary streams of received packets.

## DETAILED DESCRIPTION

In the following description, numerous specific details are set forth to provide a thorough understanding of embodiments of the invention. One skilled in the relevant art will recognize, however, that the invention can be practiced without one or more of the specific details, or with other methods, components, devices, etc. In other instances, well-known structures, devices, or operations are not shown or described in detail to avoid obscuring aspects of the invention.

The present invention will now be described in more detail with reference to exemplary embodiments thereof as shown in the appended drawings. While the present invention is described below with reference to preferred embodiments, it should be understood that the present invention is not limited thereto. Those of ordinary skill in the art having access to the teachings herein will recognize additional implementations, modifications, and embodiments, as well as other fields of use, which are within the scope of the present invention as disclosed and claimed herein, and with respect to which the present invention could be of significant utility.

The present invention provides a method and a device implementing thereof for estimating a network contribution into the subjective quality of a packetized transmission of a multimedia signal, which includes estimation of the packet loss related impairments by direct counting of all packets lost and/or received in all burst and gap intervals during the transmission.

In the context of this specification, the words "multimedia signal" is used to mean one of a voice signal, audio signal and video signal, or any their combination. In the following description, the method and device of the present invention are described in reference to exemplary embodiments that use the VoIP technology and an RTP to transmit voice signals; however, one skilled in the art will appreciate that the method and device of the present invention can be used in conjunction with other multimedia signals, for example for the IPTV technology, wherein a TV signal is transmitted over an IP-based communication system or network.

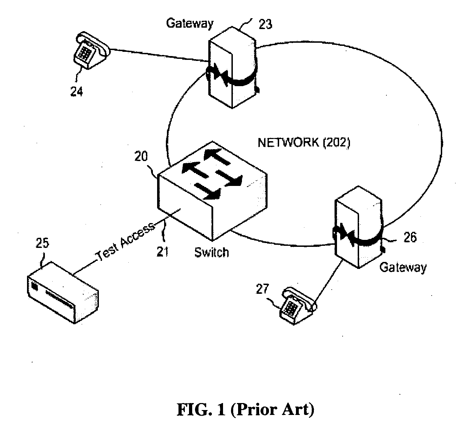

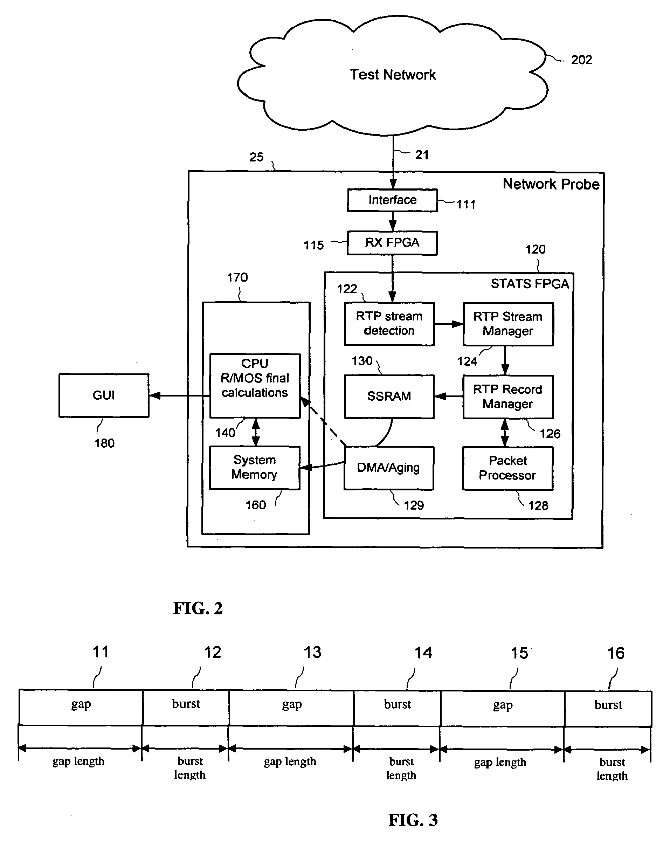

Exemplary embodiments of the present invention are shown in FIGS. 2, 4, and 6 to 9, and the application of the present invention within a multimedia communications system is shown in FIG. 1.

FIG. 1 shows a typical Voice over IP network and illustrates the application of the present invention. A user at a first location uses a telephone 24 to call another user at a second location who uses a second telephone 27. The first and second telephones are connected to Gateways 23 and 26, respectively, which are connected to an IP network 202. The analog voice path from Telephone 24 is connected to VoIP conversion equipment contained in the VoIP Gateway 23. Dialing information from telephone 24 causes VoIP Gateway 23 to establish a connection through the IP Network (202) that includes a packet switch 20 to VoIP conversion equipment contained in the VoIP Gateway 26 and thereby to telephone 27. When the connection is established, voice communications between Telephone 24 and Telephone 27 is provided by means of a packet voice connection between the VoIP conversion equipment of the gateways 23 and 26. The VoIP conversion equipment of the VoIP gateways 23 and 26 use a first codec to encode analogue voice signals into a digital signal, which is then transmitted in an ordered sequence of packets using RTP, UDP and IP protocols, and to decode received RTP packets. Each of the RTP packets includes a header containing a stream identifier which indicates that the packet belongs to an RTP packet sequence corresponding to a particular voice transmission, and a sequence number of the packet indicating the packet position in the RTP packet sequence corresponding to the transmitted signal. A Transmission Quality Monitor (TQM) which includes features of the present invention is connected to the IP/VoIP switch 20 via a test access link 21 through which a portion of the network traffic can be mirrored to the TQM 25. The TQM 25 analyzes the network traffic, identifies the stream of RTP packets corresponding to a single multimedia signal, e.g. to the VoIP connection between the telephones 24 and 27, and provides one or more transmission quality characteristics, e.g. for displaying on a monitor or storing in a database.

FIG. 2 shows a functional scheme of the TQM 25 in one embodiment thereof, and illustrates the application of the present invention. Each block of the diagram shown in FIG.2 represents a functional unit adopted to perform or assist in performing one or more steps of the method for transmission quality monitoring of the present invention. The various functional units shown as blocks in FIGs.1-3 can be integrated or separate structures implemented in either software or hardware or a combination thereof commonly known to provide the aforedescribed functionalities, including but not limited to network cards, general purpose processors, DSPs, ASICs, FPGAs, and memory devices.

The TQM 25 includes a receiver (Rx) block 115 embodied as an Rx FPGA, which in turn connects to a Statistics (Stats) block 120, which is embodied as another FPGA and is referred to hereinafter as the Stats block 120, or Stats FPGA 120. The Stats block 120 connects to a processing block 170 that includes a processor block 140 and a system memory 160 block accessible to the processor 140.

The network interface unit 111 includes a Physical Layer Interface or PHY layer, and a Medium Access Control or MAC protocol layer. These terms are commonly used in the industry and their meaning and usage will be clear to practitioners in the field of networking. The network interface unit 111 receives network frames from the network access connection 21, and passes them to the Rx FPGA 115. The Rx FPGA 115 parses the network frames and detects the IP protocol layer of the received frames. For UDP frames, or packets, it creates a "packet descriptor" which contains all information needed for the STATS block 120. In particular the packet descriptor contains an RTP header which contains an RTP sequence number and a packet stream identifier.

For each identified UDP packet, the RX block 115 sends the packet descriptor to an RTP stream detection block 122 of the STATS block 120. The RTP stream detection block 122 operates in real time to analyze the packet descriptors as they are received from the Stats block 115, identifies RTP packets and provides their descriptors to an RTP stream manager 124, which takes care about RTP stream "book-keeping". Namely, it detects whether the packet associated with a particular descriptor is a first received packet of a new RTP stream, or belongs to an RTP stream that was already detected. If the packet is the first packet of a new RTP stream, the RTP Stream Manager 124 stores a new entry for the new RTP stream in a memory block 130, obtains an index for this entry and provides this index and the packet descriptor to an RTP Record Manager block 126. If the packet belongs to a stream for which an entry already exists, the RTP stream Manager 124 provides an index of the corresponding entry stored in memory 130, said entry containing information about the previously received packets for the stream, and the new packet descriptor to the RTP Record Manager 126.

The RTP Record Manager 126 uses the index of the stream entry to retrieve the stream record from the Memory 130. From this record a sequence number $Seq_{last}$ of a latest packet of the same stream that was received prior to the current packet is read. Then the RTP Record Manager 126 retrieves from the memory 130 the sequence number Seq of the packet descriptor and provides the stream record and both sequence numbers Seq and $Seq_{last}$ to a Packet Processor (PP) block 128. This block uses the stream records and the two sequence numbers Seq and $Seq_{last}$ to implement an algorithm of the present invention for the packet loss distribution estimation which is described hereinbelow, and updates the stream records fields with a set of counters according to results of the algorithm execution, as will be described hereinbelow. In particular the following fields are updated: gaps and bursts counters, the packets lost and/or received in a burst, the packets lost or received in a gap, an identifier for the current state of the stream, i.e. either burst or gap, and a length of the current state. A list of the fields that the PP block 128 updates in the memory 130 in one embodiment of the invention is given in Table 2 and will be hereinafter discussed more in detail. The updated records are written in the memory 130, and are made available to the processing block 170, which uses them to compute the equipment impairment factor and transmission quality ratings for a particular RTP stream according to the method of the present invention.

In a preferred embodiment, the Rx block 115 and the Stats block 120 are embodied as FPGAs, the processor 140 is a general purpose micro-processor. In other embodiments, the processor 140 can be a DSP, or a combination of a general purpose processor such as used in personal computers, and a DSP. Memory blocks 130 and 160 can be implemented using any types of computer-readable memory that can keep records for all detected RTP streams. For instance, memory 130 can be an internal FPGA memory, or SSRAM, or SDRAM, or any other suitable type of memory. Memory 160 is preferably a system memory that is accessible by the CPU 140. In some embodiments, the memory blocks 130 and 160 can be a implemented using a single memory module. In the shown embodiment, memory 130 is embodied using SSRAM, and memory 160 is the system memory of the processing block 170, that can be embodied e.g. using SDRAM. A Direct Memory Access (DMA) block 129 is used to transfer the stream records from the memory 130 to the memory 160 for use by the processor 140. In one embodiment, this block transfers all stream records from the Memory 130 to the Memory 160 at pre-determined time intervals, e.g. very 5 seconds. In the process of transferring this block checks recording activity for each of the RTP streams. If a particular stream was not active in the last e.g. 10 seconds, i.e. if there were no packets of this stream detected, the DMA 129 indicates this by setting of a special, i.e. 'aging' bit in the stream record in the Memory 160. After the transfer is completed, the DMA 129 generates an interrupt for the CPU 140 letting it know that that data are available for further processing.

Upon receiving the interrupt, the CPU 140 uses the respective stream record in the Memory 160 and performs final calculations to determine a set of output parameters such as the transmission quality ratings $R$ and MOS factors; these output parameters are then delivered to the client, e.g. the GUI 180, which may display the results on a screen or save them in a file for later analysis.

During the transmission via the network 202, some of the RTP packets are lost or delayed. In the considered embodiments, RTP packets that are received not in the correct order, i.e. not according to their sequence number *Seqn* in a particular RTP stream, are discarded and are treated as packets lost. In other embodiments, a jitter buffer or a jitter buffer emulator can be implemented, e.g. within the Stats block 120, for re-ordering sections of RTP streams to account for the out-of-order RTP packets, as would be known to those skilled in the art.

Method To Compute Statistical Parameters Of Packet Loss

The processing block 170 computes transmission quality estimates for any of the detected RTP streams, i.e. those packet streams which records are stored in the memory 130, using statistical parameters for the respective stream provided by the PP block 128. In the following, the words "packet stream" will be used to refer to a single stream of RTP packets that is detected by the RTP Stream detection block 122, and which corresponds to a single voice or audio transmission, also referred to as "call", from a single sender, e.g. the telephone 24. In the described embodiment the RTP packets carry voice data and therefore will also be referred to as VoIP packets. Accordingly, the term "packet" will be used hereinafter to mean an RTP/VoIP packet from said single stream of RTP/VoIP packets, unless stated otherwise.

The packet stream is represented as a sequence of low packet loss intervals, also referred to as gaps, interspersed with high packet loss intervals, or bursts. This is represented in FIG.3, schematically showing a portion of the stream wherein gap intervals 11, 13, 15 are interspersed with burst intervals 12, 14 and 16.

In a preferred embodiment, a burst is defined in accordance with the ITU document G.1020, as a longest contiguous sequence of packets in the stream beginning and ending with a packet loss, during which the number of consecutive received packets is less than a threshold value Gmin; by way of example, a suitable Gmin value for VoIP services is 16, whereas for Video services a higher value of 64 or 128 is preferable. In other words, a burst is a part of a packet stream with relatively high rate of missing packets that is at least $r_{th}$ = 1/Gmin. A gap is the complement of a burst, i.e. it is a part of the packet stream between two consecutive bursts, or in other words, a part of the packet stream with relatively low rate of missing packets, wherein consecutive packet loss events are separated by at least Gmin consecutive packets received in a row without any packet loss in-between, so that the packet loss rate for gaps is equal or less than $r_{th}$ = 1/Gmin.

The E-Model

The processing block 170 and the packet processor 128 implement steps of the method of the present invention for determining the network contribution into the subjective transmission quality of a multimedia stream. In the preferred embodiment, the method uses an extension of the E-model, which will now be briefly described; more detailed description of the model can be found, e.g. in the ITU-T Recommendation G.107 and the ETSI TS 102 024-5 specification, which are incorporated herein by reference for all purposes.

The E-model is a computational model for assessing the combined effects of variations in several transmission parameters that affect the perceived quality of VoIP signals. The primary output from the conventional e-model is the overall transmission quality Rating Factor $R$. The $R$ factor ranges from 1 (low quality) to 100 (high quality), and can be calculated as

$$R = Ro - Is - Id - Ie\text{-}eff - Irecency + A, \qquad (1)$$

where $Ro$ represents the effect of signal-to-noise, or loudness-to-noise ratio, $Is$ is a combination of all impairments which occur simultaneously with voice signal, Id represents impairment caused by delay, $Ie\text{-}eff$ represents the equipment impairment factor, which accounts for packet loss and impairments caused by low bit rate codecs and will be also referred to hereinafter as the packet loss impairment factor, $Irecency$ captures impairment resulted from significant packet loss, e.g. in the case of a VoIP stream, when 8 or more packets lost in a row, and $A$ is an advantage factor, used to compensate for the allowance users make for poor quality when given some additional convenience (e.g. the cellphone).

The $R$ factor captures all major impairments introduced by various voice channel elements on the way of the voice signal from one end-point of the voice communication channel to another, e.g. from the telephone 23 to the telephone 26 in FIG.1. It estimates the overall perceptual quality of the voice transmitted through the channel. This overall $R$ factor is also commonly denoted as $R_{CQE}$, to distinguish it from another R-factor known in the art, namely $R_{LQE}$. The $R_{LQE}$ parameter differs from the $R_{CQE}$ factor represented by equation (1) only by the Id term:

$$R_{LQE} = R_{CQE} + Id \quad .(2)$$

The effective equipment impairment term *Ie-eff* in equation (1) depends on the used codec and a packet loss distribution Ploss in the stream that carries the voice signal, which can symbolically be expressed as follows: *Ie-eff=Ieeff* (codec, Ploss).

The ETSI TS 102 024-5 document specifies the following procedure to determine the R factor for a stream of VoIP packets.

i) compute average packet loss densities in percents Ppl(b) and Ppl(g), for the burst and gap states, respectively, and average lengths, in number of packets, Nb and Ng, of the burst and gap states, respectively;

ii) map the packet lost densities Ppl(b) and Ppl(g) to 'burst' and 'gap' equipment impairment factors Ie(b) and Ie(g) for the used codec using a pre-defined mapping function

$$Ie(j) = E(codec, Ppl(j)), \quad\quad (3)$$

where 'j' denotes either "b" or "g"; for example, the following formula provided in G.107 can be used to compute the Ie(j) factors:

$$Ie(j) = Ie + (95 - Ie)\frac{Ppl(j)}{Ppl(j) + Bpl} , \quad\quad (4)$$

where *Ie* represents codec-specific voice quality degradation caused by encoding and compression, and *Bpl* is a codec-specific parameter related to the codec robustness to packet loss. Ie and Bpl values for different codecs are tabulated in ITU documents G. 107 and G.113;

iii) compute an average equipment impairment factor Ie(av) by time averaging using the 'burst' and 'gap' equipment impairment factors Ie(b) and Ie(g), the average duration of burst and gap states b=$\tau \cdot$Nb and g = $\tau \cdot$Ng, where $\tau$ is an average packet duration, and exponential time-dependent weighting factors accounting for the dependence of the listener's "frustration" level on the burst duration, see e.g. the aforementioned publication by Clark, A.D., "Modeling the Effects...", which is incorporated herein by reference;

iv) compute the R rating for the stream using the average equipment impairment factor Ie(av) in place of the Ie-eff in equation (1). Since some of the elements of the E-model, as represented by impairment terms in equation (1) may not be measurable using the network equipment, their default values can be used, e.g. as provided in G.107, yielding the following equation for the R rating that can be used instead of equation (1):

$$R = 94 - Id - Ie(av)(codec) \quad\quad (1')$$

wherein the notation Ie(av)=Ie(av)(codec) is used to emphasize the dependence of the Ie(av) parameter on the used codec.

The method of the present invention improves upon this prior art procedure in several important aspects, including the following.

R-factor

First, as stated hereinbefore, the $R_{CQE}$ factor conventionally provided as the output of the e-model includes codec-related impairments, and therefore may not be a suitable measure of the network's contribution to the perceived transmission quality, which would be useful, e.g., for network operators. For example, for an ideal network, with no network related delays, jitter, or packet loss, and three different voice streams each of which is using a different codec and thus yielding different $R_{CQE}$ values, as shown in Table 1. For a network operator it is necessary to know which codec is used for each voice stream, as well as contributions of these codecs to the $R$ factors, in order to evaluate and possibly improve the network contribution to the quality of these streams.

Table 1

| Codec | $R_{CQE}$ |
|---|---|
| G.711 | 93.2 |
| G.729 | 82.2 |
| G.732.1 | 77.2 |

The current invention substantially simplifies this task of the network operator, by providing a novel R factor related parameter which does not depend on a particular codec used for the transmission. In one embodiment, this new parameter, hereinafter denoted as $R_{NPE}$, where NPE stands for "network performance estimate", is calculated as follows:
$$R_{NPE} = Ro - Is - Id_{other} - Ieeff(G.711, Ploss) + A. \quad (5)$$

or, alternately,
**[0085]**

$$R_{NPE} = 94 - I_{dother} - Ie(av)(G.711) \quad (5')$$

where $Id_{other}$ denotes contribution of codec-independent delays in the packet delay impairment factor Id. The new R-factor $R_{NPE}$ has a meaning of the $R_{CQE}$ factor calculated for a voice stream coded by a G.711 codec, which, according to an ITU specification G.113, is associated with a zero voice quality degradation. $R_{NPE}$ value provides a convenient tool for a network operator to monitor network's contribution into overall quality of a VoIP call or a video stream. In the example given herein above in reference to Table 1, $R_{NPE}$ has the same value 93.2 for all tree streams independently of the codecs used.

Obtaining the conventional R-factors, namely $R_{CQE}$ and $R_{LQE}$, and the novel R-factor of the present invention $R_{NPE}$ enables the user to determine how much of a VoIP call degradation is caused by the network ($R_{NPE}$), happened because of a delay ($R_{LQE}$ - $R_{CQE}$), or was introduced by the codec: ($R_{NPE}$ - $R_{CQE}$).

Note that although in the preferred embodiment the effective equipment impairment factor is computed using tabulated data for the G.711 codec, other embodiments can use an alternative codec as the reference codec in place of the G.711 in equation (5), as long as the reference codec has known, preferably but not exclusively zero, transmission impairments associated therewith.

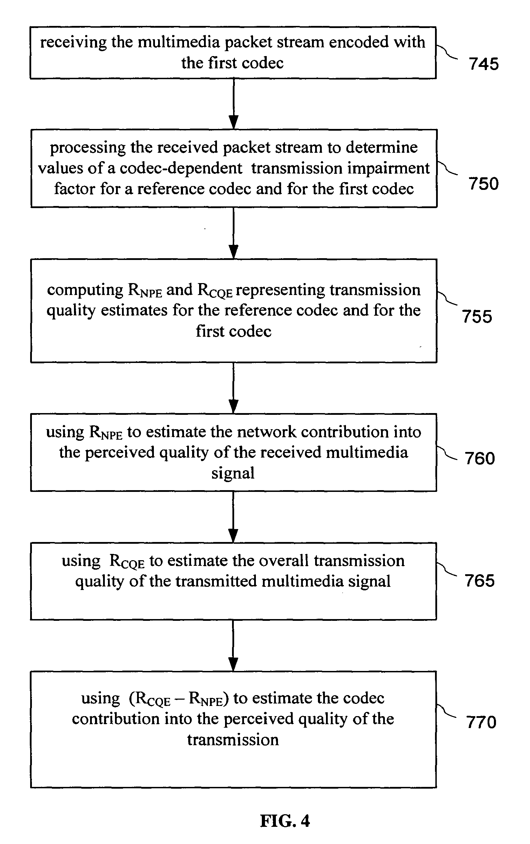

Accordingly, one aspect of the invention provides a method for estimating the network 202 performance in transmitting the packet stream carrying a multimedia signal encoded using the first codec by computing an R-rating value for a reference codec having known transmission impairments associated therewith. With reference to FIG. 4, the method comprises the following general steps:

In a first step 745, receiving the multimedia packet stream from the network;

In a step 750, processing the received packet stream to determine value of one or more codec-dependent transmission impairment factors, such as Ie-eff and Id, for a reference codec having a known transmission impairments associated therewith; in the preferred embodiment and VoIP signals, the selected codec is the G.711 codec that does not introduce voice quality degradation;

In a step 755, computing the transmission quality rating parameter $R_{NPE}$ using the determined values of the codec-dependent transmission impairment factors, e.g. Ie-eff(G.711, Ploss) and Id(G.711); in one embodiment, this computation can be performed using equation (5) or its derivative, and known or computed values for at least one of the codec-independent impairment factors selected from the list $Id_{other}$, Is, Ro, and A; the parameter $R_{NPE}$ computed this way represents the transmission quality estimate for the reference codec; and,

In a step 760, using the transmission quality rating parameter $R_{NPE}$ for estimating the network (202) contribution into the perceived quality of the received multimedia signal.

In some embodiments of the invention, both the conventional $R_{CQE}$ factor and the network $R_{NPE}$ factor can be computed in step 755, e.g. for estimating the overall quality of the transmitted multimedia signal in a step 765; yet in other embodiments, their difference ($R_{CQE}$ - $R_{NPE}$), or a parameter derived therefrom, is provided to the user for estimating the codec contribution into the perceived quality of the received multimedia signal in step 770.

This method can be used for estimating the network contribution in the transmission quality of two multimedia streams encoded using different codecs; while the conventional transmission quality factors $R_{CQE}$ computed for the two streams would include different codec-related contributions masking the network-related transmission impairments, a direct comparison of the $R_{NPE}$ factors computed for the two streams according to the method of the present invention will immediately reveal differences in the network performance for the two transmission routes associated with the two multimedia streams.

Packet Loss Impairment Estimation

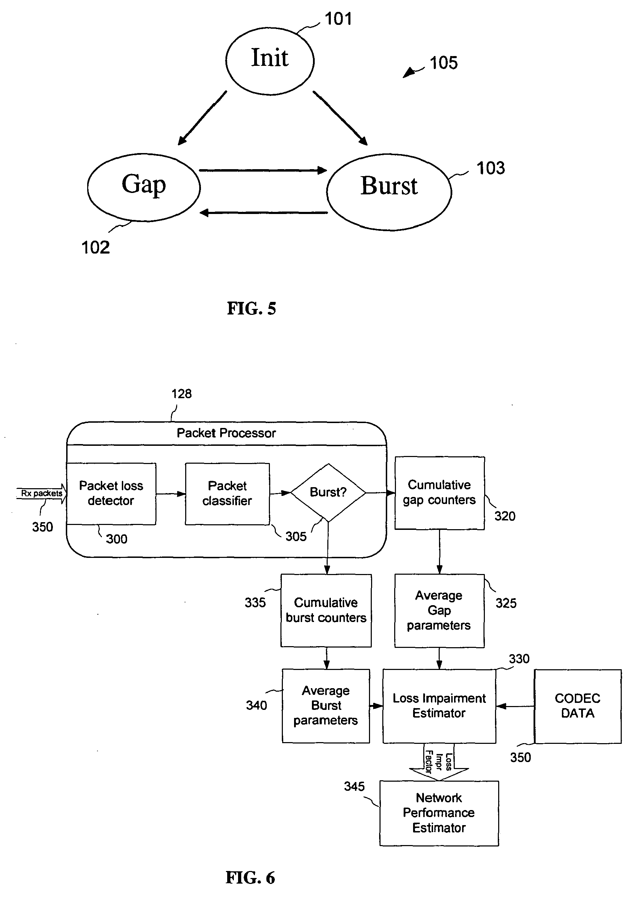

Another aspect of the method of the present invention provides an improved algorithm to obtain the packet loss distribution parameters that are required for determining the packet loss related impairments to transmission quality of multimedia signals. This aspect of the invention will be now described with reference to FIGs.5-9.

As described hereinbefore, the packet loss related impairments are represented in the e-model by the effective equipment impairment factor Ie-eff, which can be estimated by first determining the average parameters of the burst and gap intervals of the received packet stream, namely the average packet loss densities Ppl(b) and Ppl(g) for the burst and gap states, respectively, and their respective average lengths N(b) and N(g), mapping each of the two Ppl values to equipment impairment factors, and then using the time averaging to obtain Ie(av)

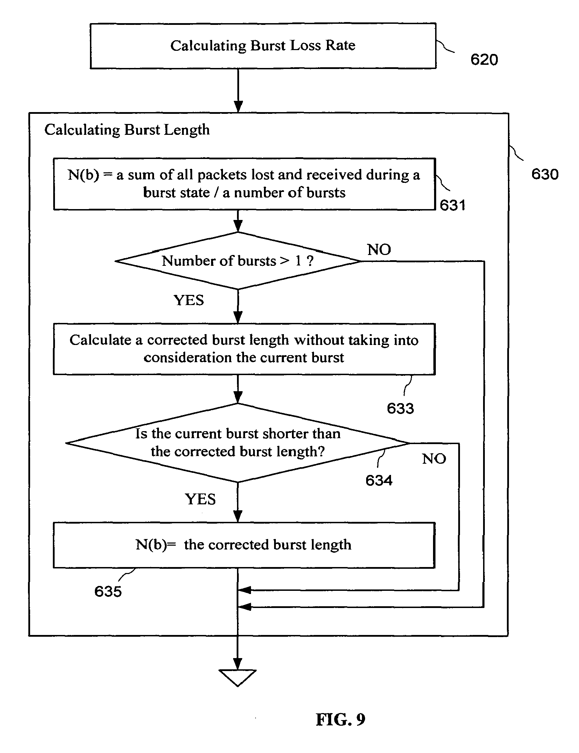

Heretofore, the average parameters of the burst and gap intervals have been conventionally calculated using a statistical approach based on a four-state Markov process. For example, the ETSI TS 102 024-5 specification, Appendix E, describes a Markov chain based statistical model wherein the average gap and burst parameters are determined by computing transition probabilities for the following four states: State 1 - gap - no loss; State 2 - burst - no loss; State 3 - burst - packet loss; State 4 - gap - packet loss. Computational algorithms implementing the Markov chain model in C and C++ are provided in the ETSI TS 102 024-5 specification, in the Clark's paper and in the IETF document RFC 3611 "RTP Control Protocol Extended Reports (RTCP XR)", 2003, p.48. The prior art approach does not involve computing the actual lengths and packet loss rates for the either gaps or bursts, but only the transitional probabilities, and has a number of drawbacks described hereinbefore in the Background portion of this specification. Due to these drawbacks the prior art Markov chain based algorithms may provide inaccurate results, especially for relatively short streams containing just a small number of gaps and bursts, as will be illustrated hereinafter with reference to two particular packet stream examples shown in FIGs. 9A-10B.

Contrary to the prior-art Markov chain based statistical approach, the method of the present invention obviates the drawbacks of the prior art approach, by obtaining the average gap and burst parameters by direct counting of packets in each of the gap 11, 13, 15 and burst 12, 14, 16 states of the received RTP packet stream illustrated in FIG.3.

In one embodiment, the method computes the average gap and burst parameters for the RTP stream based on a Finite State Machine (FSM) representation, which is illustrated in FIG. 5. The state machine 105 has 3 states associated with the received packet stream, labeled as "Init", "Gap", and "Burst". The "Init" state 101 corresponds to the beginning of the stream. From the "Init" state 101 the FSM 105 moves into the "Gap" state 102 or the "Burst" state 103, depending on values of packet counters, and never returns to the "Init" state 101, moving between the "Gap" and the "Burst" states 102 and 103, respectively. The FSM 105 moves into the "Burst" state 102 when a burst of packet loss is detected, and moves back to the "Gap" state 103 when an end of a packet loss burst is detected. The gap and burst states 102 and 103 can be considered to represent states of the network 202 at a particular time moment, i.e. a state of the VoIP connection between the telephones 24 and 27 that results in a high or low probability of packet loss at some point of the connection; alternatively they can be seen as associated with the respective intervals of the received packet stream received by the TQM 25, as illustrated in FIG. 3.

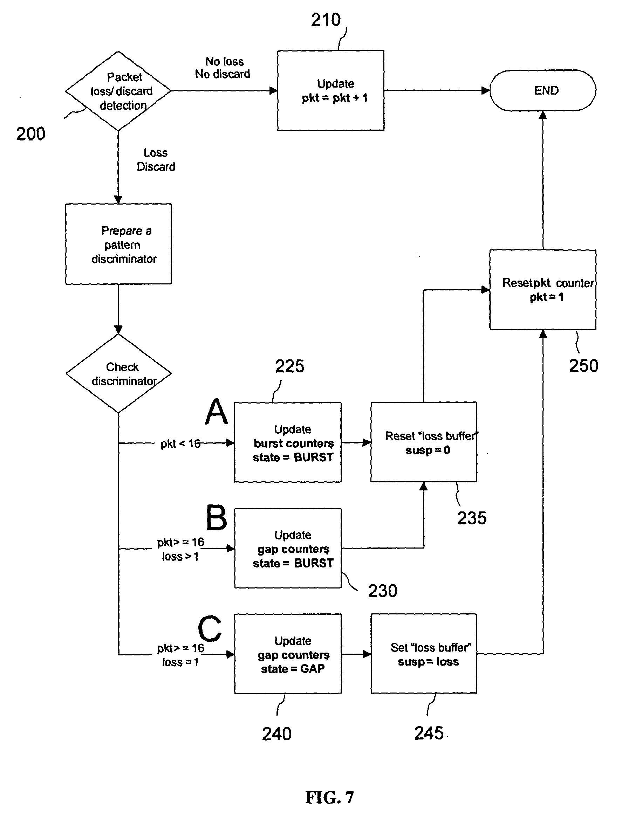

FIG. 6 presents a functional view of a portion of the transmission quality monitor 25 which performs processing of individual RTP streams. Each block in FIG. 6 represents a functional, or logical unit which can be embodied in hardware or software and is adopted to perform one or several steps of the method of the present invention; these steps will be also hereinafter described in conjunction with the description of the corresponding functional blocks. Referring back to FIG. 2 which gives a device-oriented view of the TQM 25, the blocks shown in FIG. 6 can be realized within or using the PP block 128, the SSRAM block 130, and the data processing block 170.

With reference to FIG. 6, the TQM 25 includes a packet loss (PL) detector 300, which connects to a packet classifier 305 coupled to memory units 320 and 335. The memory units 320 and 335 are coupled to data processing blocks 325 and 340, which provide input for a packet loss impairment estimator (PLIE) 330 that connects to a network performance estimator 345. A third memory unit 350 is coupled to the PLIE 330 and contains codec related data.

In operation, the PL detector 300 receives information 350 for each received packet of a single RTP stream from a network interface, which is not shown in FIG. 6 and can include the blocks 115, 122, 124, and 126 shown in FIG. 2. The packet information includes the RTP sequence numbers Seqn for each received packet of the RTP stream. Using this information, the PL detector 300 infers lost or discarded packet events, and relates this information to the packet classifier 305.

The Packet classifier 305 associates each of the received packets with either a gap or a burst interval, or state, in the received stream as shown in step 315, e.g. according to the aforedescribed packet loss frequency criterion, and updates a set of packet counters related to the gap and burst states in the memory units 320 and 335, respectively. These counters include a cumulative number of all packets of the RTP stream received and/or lost during the gaps, and a cumulative number of all packets of the RTP stream received and/or lost during the bursts, and numbers of bursts and gaps recorded for the stream so far. In other embodiments, the packet classifier may associate each of the received packets with one of more than two states according to a pre-defined packet loss frequency criterion. This counters are then used by the data processing blocks 325 and 340 to compute the average packet loss rate Ppl(g) and Ppl(b) for the gaps and bursts, of the received packet stream, respectively, and the average gap length N(g) and the average burst length N(b).

For the exemplary embodiment of the invention described herein with reference to FIG.2, the PL detector block 300 and the packet classifier 305 are realized in programmable hardware, namely in the packet processor block 128 of the STATS FPGA 120, which performs real-time counting of the packets in the RTP stream as said stream is being received by the TQM 25. The memory units 320 and 335 that store the set of packet counters provided by the PP block 128 can be realized within the memory block 130, while the data processing blocks 325, 340 and the NPE estimator 345 are realized using the data processor 170. In other embodiments wherein real-time packet processing is not required, all of the blocks shown in FIG. 6 could be realized using e.g. a general purpose computer.

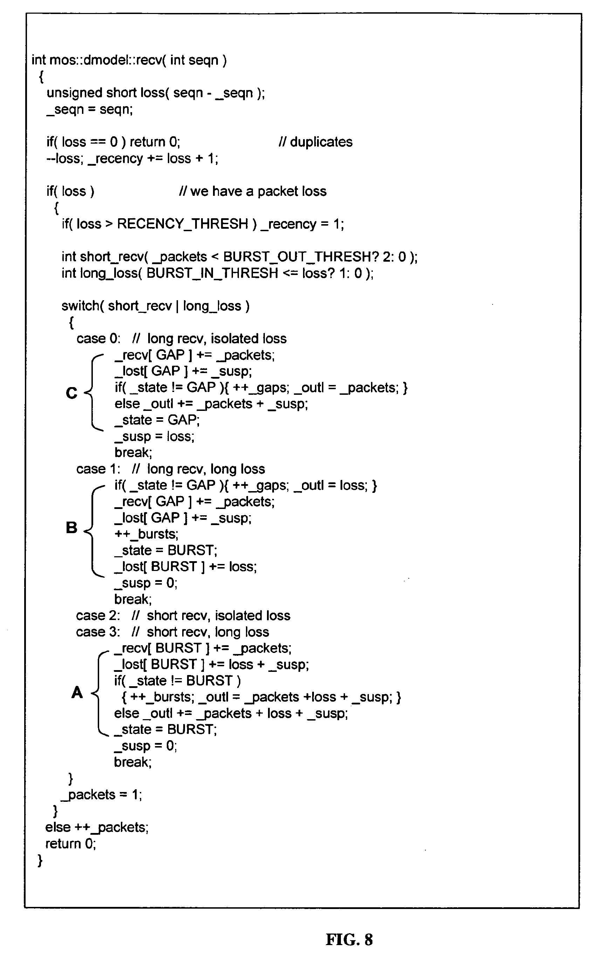

An exemplary algorithm for implementing the packet processor 128 in real time is illustrated by a block-schema in FIG. 7 and by a C++ code given in FIG. 8. Table 2 lists some of the counters provided by the algorithm. The algorithm determines the current state of the stream has the following advantageous features that overcome the aforedescribed drawbacks of the prior art.

Table 2

| data field | description |
| --- | --- |
| _recv[0] | total number of packets received in gap states so far |
| _recv[1] | total number of packet received in burst state so far |
| _lost[0] | total number of packets lost in gap states so far |
| _lost[1] | total number of packet lost in burst states so far |
| _bursts | number of bursts happened so far |
| _gaps | number of gaps happened so far |
| _packets | number of packets received in a row without any packet lost in the current state |
| _seqn | the sequence number of the most recently received RTP packet; this number is used to detect the packet loss. |
| _outl | length in packets of the current state |
| _state | current state of the FSM |
| _susp | number of packets lost in a row for which it's note yet decided were they lost in a gap or in a burst. |
| _recency | number of packets since the last significant packet loss; same as parameter "'y" specified in Appendix E.7.2 of the ETSI TS 102 024-5 specification. |

For handling of multiple packets lost or discarded in a row, the algorithm of the current invention, in addition to identifying an event of the packet loss, provides a parameter 'loss', which is the number of packets lost in a row, this parameter is calculated in the packet loss/drop detection step 200, which is performed by the PL block 300 in FIG.6. The parameter 'loss' is determined simply by comparing RTP sequence numbers of two latest consecutively received packets, so that the algorithm does not need to be repeatedly executed for each packet lost when more than one packet is lost in a row. If the parameter 'loss' is equal or greater than a predetermined threshold value 'BURST_IN_THRESH', which is equal to 2 in the shown embodiment, the latest received packet is associated with the burst state in step 230.

Next, the algorithm of the present invention includes a special "buffer" counter '_susp' for treating isolated packet loss events encountered at the end of a gap state of the stream. When a lost packet $p_1$ is inferred in a gap state, this lost packet is counted in step 245 in the "buffer" counter '_susp' rather than being associated with the gap state as in the prior art algorithms. A decision in which state this packet was lost is delayed until the next packet loss event p2 is recorded by the packet loss detector 200, depending whether the number of packets that are received between the two packet loss events, said number stored in a counter "_packets', named "pkt" in FIG.7, is greater or lower than the burst threshold value Gmin, which in the shown embodiment is assumed to be equal 16. If _ packets < 16, in step 225 of the algorithm the current state of the stream is updated to "burst", the isolated lost packet is correctly associated with the new burst state, and the counter of all packets lost in the burst states so far '_lost[1]' is updated. If _packets $\geq$ 16, the isolated lost packet is associated with the gap state in step 230 of the algorithm, and the counter '_lost[0]' of all packets lost in the gap states so far is updated. In both cases, the "loss buffer" counter _susp is reset in step 235.

Advantageously, the algorithm of the present invention also provides a solution to the "last state" problem, by saving the last state length, which is measured in number of packets, in the counter '_outl'. This counter is updated with each received packet in one of the steps 225, 230 and 240, as shown in the portions of the C++ code in FIG.8 labeled with letters "A", "B" and "C" respectively, and provided to the processing blocks 325 and/or 340 which take it into account when calculating the average length of the burst or gap states.

According to a preferred embodiment of the invention, the calculations of the average gap and burst parameters for the stream is done differently depending on the current state of the stream, in particular excluding from averaging the last section of the stream as a statistical outlier if it's length '_out1' is less than the average length calculated without taking the last section into account; this enables to eliminate statistical outliers associated with the "end of call", which can have an adverse effect on precision of the estimates of the state lengths, since the length of the last state is limited by the end of call event rather than by the network performance.

By way of example, FIG. 9 illustrates the calculation of the average burst loss density and length by the burst processing block 340 in one embodiment of the method of the present invention, if the last state of the stream, as recorded by the PP block 128, is "Burst".

In this embodiment of the invention, the burst processing block 340 uses the counters stored by the PP block 128 in the memory unit 335, namely 'recv[1]', 'lost[1]', 'bursts', and, in the considered case when the last state is BURST, 'out1' to compute the average burst loss density Ppl(b) and the average burst length N(b), as follows.

In a step 620, the average burst loss density Ppl(b) is computed using the counters provided by the PP block 128 and the following formula:

$$Ppl(b) = lost[1]/ (recv[1]+lost[1]) . \quad (6)$$

In a step 630, the average burst length N(b) is calculated, as follows:

If the number of bursts recorded for the stream is one, i.e. bursts = 1, the average burst length is computed in a step 631 as follows:

$$N(b) = (recv[1]+lost[1])/bursts. \quad (7)$$

If bursts>1, a corrected burst length is computed in step 633 without taking into account packets received during the last state:

$$N\_corr = (recv[1]+lost[1]-\_outl)/(bursts-1), \quad (8)$$

and compared in step 634 to the length _outl of the current, i.e. last, burst. If _outl is shorter than the corrected burst length N(b)_corr, the average burst length N(b) is assigned the value of the corrected burst length N(b)_corr in step 635:

$$N(b) = N\_corr ; \qquad (9)$$

Otherwise, the burst length N(b) computed in step 631 is provided in the output of the burst processing block 340 to the loss impairment estimator 330.

A similar approach can be employed in the gap processing block 325 for calculating the average length of the gap states N(g), if the last recorded state is "Gap", and the average gap density Ppl(b).

The statistical parameters Ppl(b), N(b), Ppl(g), and N(g) of the packet loss distribution, which are obtained according to the present invention as described hereinabove, are provided by the gap and burst data processing blocks 325 and 340 to the PLIE block 330, which uses these parameters to compute the packet lost impairment factor Ie(av), e.g. using equation (4) and the aforedescribed prior-art weighted time averaging approach.

As described hereinabove with reference to equations (3) and (4), the packet lost impairment factor Ie(av) depends on a codec, referred herein as the first codec, that was used in generating the packet stream, e.g. through the codec-related parameters Ie and Bpl, so that Ie(av)=Ie(av)(Ie, Bpl) in accordance with equation (4). These parameters are stored in the memory unit 350, and are available for the PLIE 330; an ITU document G.113(Appendix I) provides suggested Ie and Bpl values for several commonly used codecs.

In one embodiment, the PLIE block 330 computes a first value of the packet lost impairment factor Ie(av) using the Ie and Bpl values for the reference codec, e.g. G.711, and a second value of the packet lost impairment factor Ie (av) using the Ie and Bpl values for the first codec. These two values of the packet lost impairment factor Ie(av) are then provided to the NPE block 345, and are used by the NPE block 345 to compute the $R_{NPE}$ and $R_{CQE}$ factors, in accordance with the step 755 of the method of the present invention as described hereinabove with reference to FIG. 4.

The method of the present invention described hereinabove in this specification is computationally efficient, and may provide significantly better estimates for the parameters of the packet loss distribution then the prior-art approach based on the statistical Markov changing model, especially for relatively short packet streams. The following two examples illustrate advantages of the method of the current invention over the prior-art Markov chain based statistical model for estimating the average gap and burst characteristics of received packet streams.

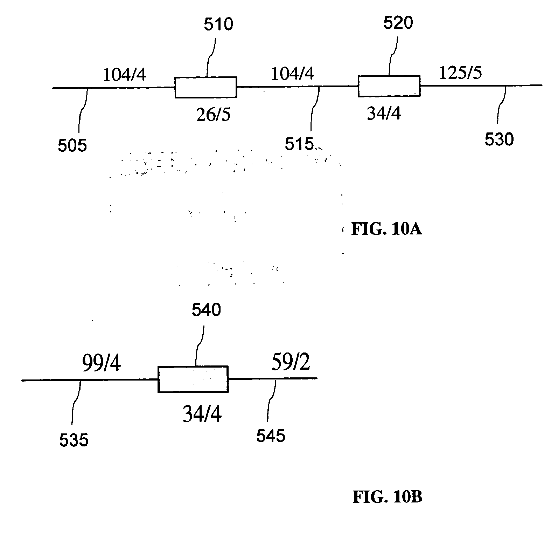

In a first example, the received packet stream is schematically shown in FIG. 10A, with rectangles 510 and 520 representing two bursts of packet loss, and straight lines 505, 515 and 530 representing three gaps. A notation N/m used in the figure to denote each of the gap and burst interval indicates that in a corresponding stream interval N packets were sent and m packets were lost, so that the number of received packets within the interval is (N - m). Table 3 gives the average packet loss distribution parameters obtained by the prior-art Markov chain method described in the ETSI document TS 102 024-5 (second column labeled as "Statistical model"), and by the aforedescribed method of the present invention (third column labeled as "FSM model").

As seen from the table 3, both methods produce close values of the average gap length (4th row). However, the statistical model underestimates the burst length for the stream shown in FIG. 10A by almost 30%. As the result, the statistical model would considerably underestimate the value of any of the R factors in comparison to the FSM model of the current invention, which directly calculates the packet loss distribution parameters.

Table 3

| Stat | Statistical Model | FSM Model |
|---|---|---|
| Burst Length | 20.333 | 30.000 |
| Burst Loss Density | 0.164 | 0.150 |
| Gap Length | 107.000 | 111.000 |
| Gap Loss Density | 0.037 | 0.035 |

FIG. 10B illustrates the received packet stream according to a second example, in this case consisting of a single burst interval 540 sandwiched between two gap intervals 535 and 545. The packet loss distribution parameters obtained for this stream by the prior art statistical method and the FSM-based method of the current invention is shown in Table 4. The prior-art method's estimation of the burst length in this case has an almost 50% error, i.e. it is almost half of the correct value provided by the direct counting method of the present invention. Similarly, the gap length estimation provided by the prior art method has an about 30% error. This example also shows that the FSM method of the current invention provides considerably more accurate results than the prior-art statistical packet loss model.

Table 4

| Stat | Statistical Model | FSM Model |
|---|---|---|
| Burst Length | 17.5 | 34.00 |
| Burst Loss Density | 0.143 | 0.118 |
| Gap Length | 76.5 | 99.00 |
| Gap Loss Density | 0.4 | 0.038 |

Although the description above contains many specifities these should not be construed as limiting the scope of the invention but as merely providing illustrations of some of the presently preferred embodiments of this invention. For example, the packet network may use the Internet Protocol (IP), Asynchronous Transfer Mode (ATM), Frame Relay or other connection oriented or connectionless networking protocols and may use copper wire, optical fiber, wireless or other physical transmission media. Some aspects of the invention may be employed within a cellular telephone system with the transmision quality monitor described herein located within the cellular telephone handset. The invention may also be used in other applications than multimedia communications, for example any client-server application in which the efficiency and responsiveness of the communication between the client and the server is affected by the burstiness or non-uniformity in the time distribution of packet loss and other network impairments.

Thus the scope of the invention should be determined by the appended claims and their legal equivalents, rather than by the examples given.

**Claims**

1. A device for network performance monitoring, comprising:

   a network interface coupled to the network for receiving a packet stream therefrom carrying data transmitted by a single sender;
   a packet processor coupled with the network interface for processing the packet stream, comprising:

   a lost packet detector operative to infer lost or discarded packets in the received packet stream; and,
   a packet classifier operatively coupled to the lost packet detector for associating each of the received packets with one of a plurality of states, said plurality of states comprising a high packet loss state and a low packet loss state;

   a memory coupled with the packet processor, including:

   a first memory unit for storing a cumulative number of packets received or packets lost in the high packet loss state;
   a second memory unit for storing a cumulative number of packets received or packets lost in the low packet loss state; and,

   a data processing unit coupled to the memory for computing one or more characteristics of the high and low packet loss states using the values stored in the first and second memory units.

2. A device of claim 1 wherein the one or more characteristics of the high and low packet loss states comprise an average length of the high packet loss states and an average length of the low packet loss states.

3. A device of claim 2 wherein the one or more characteristics of the high and low packet loss states comprise packet loss density parameters for the high and low packet loss states.

4. A device of claim 2 wherein the memory is for storing a number of packets in a current state, and an identifier of the current state.

5. A device of claim 4 wherein the data processing unit is operative to subtract the number of packets in the current state from the cumulative number of packets in one of the high packet loss and low packet loss states when computing the average length of the high packet loss states or the average length of the low packet loss states.

6. A device of claim 1, wherein the packet stream comprises real time data transmitted using an RTP protocol.

7. A device of claim 1, wherein the packet processor is operative to infer the number of consecutively lost packets for storing in the memory.

8. A device of claim 1, wherein the packet classifier is operative to associate a received packet with the low packet loss state, if the number of preceding sequentially received packets after the last packet loss event exceeds a pre-determined minimal value.

9. A device of claim 1, wherein the packet classifier is operative to associate a lost packet, which is inferred next to a received packet associated with the low packet loss state, with one of the high packet loss state and the low packet loss state depending on the number of packets consecutively received after said lost packet and prior to a next lost packet.

10. A device of claim 3, further comprising a packet loss impairment estimator operative to compute a packet lost impairment factor from the packet loss density parameters for the high and low packet loss states, and the average lengths of the high and low packet loss states.

11. A device of claim 10, further comprising a network performance estimator coupled to the packet loss impairment estimator and operative to compute a network performance parameter from the loss impairment factor.

12. A device of claim 11, further comprising a memory for storing information related to a reference codec for use in the computing of the packet lost impairment factor.

13. A method for estimating a packet network contribution in the perceived transmission quality of a multimedia signal encoded using a first codec, the method comprising the steps of:

    a) receiving a packet stream carrying the multimedia signal from the network;
    b) processing the received packet stream to obtain a value of a codec-dependent transmission impairment factor for a reference codec having known transmission impairments associated therewith;
    c) using the obtained value of the codec-dependent transmission impairment factor for the reference codec, determine a transmission quality rating parameter $R_{NPE}$ representing a transmission quality estimate for the reference codec; and,
    d) using the transmission quality rating parameter $R_{NPE}$ to estimate the network contribution into the perceived quality of the received multimedia signal.

14. A method according to claim 13, further comprising the steps of:

    providing a value for at least one codec-independent transmission impairment factor, and
    using said value for computing the transmission quality rating parameter $R_{NPE}$.

15. A method according to claim 14, further comprising the steps of:

    computing a value of the codec-dependent transmission impairment factor for the first codec from the received packet stream; and,
    using the value of the codec-dependent transmission impairment factor for the first codec, computing a transmission quality rating parameter $R_{CQE}$ representing the perceived overall transmission quality of the transmitted multimedia signal.

16. A method according to claim 15, further comprising the step of comparing the computed transmission quality rating parameters $R_{CQE}$ and $R_{NPE}$ to estimate a contribution of the first codec into the perceived quality of the received multimedia signal.

17. A method according to claim 13, wherein the codec-dependent factor comprises a packet loss impairment factor $I_{e-eff}$.

18. A method according to claim 17, wherein the packet loss impairment factor $I_{e-eff}$ is computed using the steps of:

inferring lost packet events in the received packet stream;

associating each of the received packets with one of pre-defined states of the received stream according to a packet loss occurrence criterion, the pre-defined states comprising a high packet loss state and a low packet loss state;

counting a cumulative number of packets received or packets lost during the high packet loss states of the received packet stream using a first counter;

counting a cumulative number of packets received or packets lost during the low packet loss states of the received packet stream using a second counter;

computing, using the first and second counters, packet loss distribution parameters for the packet stream, said packet loss distribution parameters comprising:

average lengths in the packet stream of the high packet loss and low packet loss states, respectively, and packet loss density parameters for the high packet loss and low packet loss states; computing the packet lost impairment factor $I_{e\text{-}eff}$ using the computed packet loss distribution parameters.

**19.** A method according to claim 18, wherein a lost packet following a received packet associated with a low packet loss interval, is associated with a high packet loss interval, if the number of sequentially received packets immediately following the packet loss event exceeds a pre-determined minimal value.

FIG. 1 (Prior Art)

**FIG. 2**

**FIG. 3**

receiving the multimedia packet stream encoded with the first codec — 745

processing the received packet stream to determine values of a codec-dependent transmission impairment factor for a reference codec and for the first codec — 750

computing $R_{NPE}$ and $R_{CQE}$ representing transmission quality estimates for the reference codec and for the first codec — 755

using $R_{NPE}$ to estimate the network contribution into the perceived quality of the received multimedia signal — 760

using $R_{CQE}$ to estimate the overall transmission quality of the transmitted multimedia signal — 765

using $(R_{CQE} - R_{NPE})$ to estimate the codec contribution into the perceived quality of the transmission — 770

**FIG. 4**

**FIG. 5**

**FIG. 6**

FIG. 7

```
int mos::dmodel::recv( int seqn )
  {
    unsigned short loss( seqn - _seqn );
    _seqn = seqn;

    if( loss == 0 ) return 0;                // duplicates
    --loss; _recency += loss + 1;

    if( loss )              // we have a packet loss
      {
        if( loss > RECENCY_THRESH ) _recency = 1;

        int short_recv( _packets < BURST_OUT_THRESH? 2: 0 );
        int long_loss( BURST_IN_THRESH <= loss? 1: 0 );

        switch( short_recv | long_loss )
          {
          case 0:  // long recv, isolated loss
              _recv[ GAP ] += _packets;
              _lost[ GAP ] += _susp;
          C   if( _state != GAP ){ ++_gaps; _outl = _packets; }
              else _outl += _packets + _susp;
              _state = GAP;
              _susp = loss;
              break;
          case 1:  // long recv, long loss
              if( _state != GAP ){ ++_gaps; _outl = loss; }
              _recv[ GAP ] += _packets;
              _lost[ GAP ] += _susp;
          B   ++_bursts;
              _state = BURST;
              _lost[ BURST ] += loss;
              _susp = 0;
              break;
          case 2:  // short recv, isolated loss
          case 3:  // short recv, long loss
              _recv[ BURST ] += _packets;
              _lost[ BURST ] += loss + _susp;
              if( _state != BURST )
          A     { ++_bursts; _outl = _packets +loss + _susp; }
              else _outl += _packets + loss + _susp;
              _state = BURST;
              _susp = 0;
              break;
          }
        _packets = 1;
      }
    else ++_packets;
    return 0;
  }
```

**FIG. 8**

| Calculating Burst Loss Rate |

620

**Calculating Burst Length**

630

| N(b) = a sum of all packets lost and received during a burst state / a number of bursts |

631

Number of bursts > 1 ?  → NO

YES

| Calculate a corrected burst length without taking into consideration the current burst |

633

Is the current burst shorter than the corrected burst length?  → NO

634

YES

| N(b)= the corrected burst length |

635

**FIG. 9**

510

520

104/4 ⟶ [ ] ⟶ 104/4 ⟶ [ ] ⟶ 125/5

26/5

34/4

505

515

530

FIG. 10A

540

99/4 ⟶ [ ] ⟶ 59/2

34/4

535

545

FIG. 10B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60715103 B

**Non-patent literature cited in the description**

- Modeling The Effects Of Burst Packet Loss And Recency On Subjective Voice Quality. **A. D. CLARK.** 2nd IP-Telephony Workshop. April 2001